# EUROPÄISCHE PATENTANMELDUNG

(11) **EP 2 495 692 A1**
(43) Veröffentlichungstag der Anmeldung: **05.09.2012**
(21) Anmeldenummer: 12152081.1
(22) Anmeldetag: 23.01.2012
(51) Int. Cl.: G06Q 10/00, G08B 21/04

(54) **Überwachungssystem zur Überwachung eines Inaktivitätsverhaltens einer Überwachungsperson, Verfahren sowie Computerprogramm**

(30) Priorität: 03.03.2011 DE 102011005013
(71) Anmelder: Robert Bosch GmbH, 70442 Stuttgart (DE)
(72) Erfinder: Thuersam, Markus, 71263 Weil Der Stadt (CH); Klinnert, Roland, 70825 Korntal-Muenchingen (DE); Dambier, Michael, 75015 Bretten (DE)

(57) **Zusammenfassung**

Es wird ein Überwachungssystem 1 zur Überwachung des Inaktivitätsverhalten von mindestens einer Überwachungsperson 4 in einem Überwachungsbereich 2, wobei der Überwachungsbereich 2 mindestens zwei unterschiedliche Überwachungsräume 3a,b,c umfasst, vorgeschlagen mit einer Mehrzahl von Überwachungssensoren 5, die den mindestens zwei Überwachungsräumen 3a,b,c zuordbar oder zugeordnet sind, wobei die Überwachungssensoren 5 zur Detektion einer Aktivität der Überwachungsperson 4 ausgebildet sind, mit einer Steuerungseinrichtung 8 umfassend ein Auswertemodul 11, das ausgebildet ist, Signale der Überwachungssensoren 5 auszuwerten und Inaktivitätsintervalle der Überwachungsperson 5 zu ermitteln, und ein Vergleichsmodul 12, das ausgebildet ist, das ermittelte Inaktivitätsintervall mit maximalen Inaktivitätsintervallen aus einem aktiven Modell RA zu vergleichen, sowie ein Alarmmodul 13, das ausgebildet ist, bei einer Überschreitung des ermittelten Inaktivitätsintervall über das maximale Inaktivitätsintervall des aktiven Modells RA einen Alarm auszugeben, wobei die Steuerungseinrichtung 8 ein Ortungsmodul 20 umfasst, welches ausgebildet ist, in Abhängigkeit der Signale der Überwachungssensoren 5 die Überwachungsperson 4 in einem der mindestens zwei Überwachungsräumen 3a,b,c zu orten und diesen Überwachungsraum 3a,b,c als einen aktiven Überwachungsraum 3a zu setzen, wobei das Vergleichsmodul 12 für jeden der mindestens zwei Überwachungsräume 3a,b,c ein separates Raummodell RA, RB, RC aufweist

## Beschreibung

### Stand der Technik

Die Erfindung betrifft ein Überwachungssystem zur Überwachung eines Inaktivitätsverhaltens von mindestens einer Überwachungsperson in einem Überwachungsbereich, wobei der Überwachungsbereich mindestens zwei unterschiedliche Überwachungsräume umfasst, mit einer Mehrzahl von Überwachungssensoren, die den mindestens zwei Überwachungsräumen zuordbar oder zugeordnet sind, wobei die Überwachungssensoren zur Detektion einer Aktivität der Überwachungsperson ausgebildet sind, mit einer Steuerungseinrichtung umfassend ein Auswertemodul, das ausgebildet ist, Signale der Überwachungssensoren auszuwerten und Inaktivitätsintervalle der Überwachungsperson zu ermitteln, und ein Vergleichsmodul, das ausgebildet ist, das ermittelte Inaktivitätsintervall mit maximalen Inaktivitätsintervallen aus einem aktiven Modell zu vergleichen sowie ein Alarmmodul, das ausgebildet ist, bei einer Überschreitung des ermittelten Inaktivitätsintervalls über das maximale Inaktivitätsintervall des aktiven Modells einen Alarm auszugeben. Die Erfindung betrifft auch ein entsprechendes Verfahren und ein Computerprogramm.

Hausnotrufsysteme dienen dazu, älteren oder hilfebedürftigen Menschen in Notsituationen einen Hilferuf über ein Kommunikationsnetz zu ermöglichen. Derartige Systeme bestehen üblicher Weise aus zwei Einheiten, nämlich den Teilnehmerstationen, die über ein öffentliches oder privates Kommunikationsnetz, wie Telefonnetz, Datennetz, Mobilfunknetz, datentechnisch angebunden sind und zum Beispiel in den Wohnungen bei den älteren bzw. hilfebedürftigen Menschen aufgestellt sind. Ferner umfassen die Systeme eine oder mehrere Empfangszentralen, die die durch den Menschen in Not ausgelöste Rufe empfangen können. Derartige Hausnotrufsysteme haben neben manuell auslösbaren Alarmen auch automatische Melder, wie zum Beispiel Brandmelder, Gasmelder oder Wasserstandmelder. Es ist auch üblich, einen sogenannten Aktivitätsalarm im Sinne einer Totmanneinrichtung zu verwenden, der einen Alarm absetzt, wenn nach einem voreingestellten Zeitraum von üblicherweise 24 h nicht eine Taste an der Teilnehmerstation betätigt wurde.

Die Druckschrift US 7,091,865 B2, die wohl den nächstkommenden Stand der Technik bildet, betrifft ein derartiges Hausnotrufsystem, welches ausgebildet ist, bei einer Überwachungsperson zwischen einer normalen Aktivität und einer unnormalen Aktivität zu unterscheiden. Das System umfasst eine Vielzahl von Sensoren, welche in dem Haus der Überwachungsperson verteilt sind und welche Daten über die Aktivität der Überwachungsperson in dem Haus aufnehmen. Die aufgenommenen Daten werden zu einem Monitorcenter übertragen und in einer Datenbank in Abhängigkeit von geeigneten Zeitscheiben, die einen 24h-Tag in unterschiedliche Zeitabschnitte unterteilen, eingeordnet. Auf Basis von historischen Aktivitätsdaten der Überwachungsperson werden tageszeitabhängige Schwellwertlinien erzeugt und gegebenenfalls um Pufferwerte ergänzt. Derartige Schwellwertlinien werden auch für Inaktivitätszeiten innerhalb eines 24-Stunden-Zyklusses aufgestellt. Im Fall, dass die akkumulierte Zeit der Inaktivität der Überwachungsperson während einer Zeitperiode, in der die Sensoren üblicher Weise Aktivität aufnehmen, zu groß wird, wird dieses Verhalten als unnormal identifiziert und als Hinweis auf ein Problem in dem Haus interpretiert.

### Offenbarung der Erfindung

Im Rahmen der Erfindung wird ein Überwachungssystem mit den Merkmalen des Anspruchs 1, ein Verfahren mit den Merkmalen des Anspruchs 9 sowie ein Computerprogramm mit den Merkmalen des Anspruchs 10 vorgestellt. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird ein Überwachungssystem, insbesondere ein Hausnotrufsystem, offenbart, welches zur Überwachung eines Inaktivitätsverhaltens von mindestens einer Überwachungsperson in einem Überwachungsbereich geeignet und/oder ausgebildet ist. Bei der mindestens oder genau einen Überwachungsperson handelt es sich beispielsweise um einen älteren oder hilfebedürftigen Menschen. Der Überwachungsbereich kann beispielsweise als die Wohnung oder das Haus der Überwachungsperson ausgebildet sein.

Das Inaktivitätsverhalten betrifft Zeiten oder Zeitintervalle, in denen die Überwachungsperson inaktiv ist, also keine mit dem Überwachungssystem messbare Aktivitäten oder ausreichend starke Aktivitäten, wie zum Beispiel ein Ortswechsel der Überwachungsperson, erfassbar sind. Bei einer möglichen praktischen Umsetzung kann vorgesehen sein, dass die Signale z.B. einen vorgebbaren Grenzwert überschreiten müssen, um als Aktivität oder ausreichend starke Aktivität interpretiert zu werden.

Der Überwachungsbereich umfasst mindestens zwei unterschiedliche oder separate Überwachungsräume, welche beispielsweise durch mindestens einen Durchgang oder durch mindestens eine Tür voneinander getrennt sind. Es können auch drei, vier, fünf oder mehr Überwachungsräume in dem Überwachungsbereich angeordnet sein.

Das Überwachungssystem umfasst eine Mehrzahl von Überwachungssensoren, welche im Betrieb den mindestens zwei Überwachungsräumen zugeordnet und insbesondere in den mindestens zwei Überwachungsräumen angeordnet sind. Jedem der mindestens zwei Überwachungsräume ist mindestens ein Überwachungssensor zugeordnet bzw. angeordnet, es ist jedoch bevorzugt, dass zwei, drei oder mehr Überwachungssensoren in jedem der mindestens zwei Überwachungsräume positioniert sind. Die Überwachungssensoren sind zur Erfassung oder Detektion einer Aktivität der Überwachungsperson ausgebildet.

Zudem weist das Überwachungssystem eine Steuerungseinrichtung auf, die die nachfolgenden Module umfasst:
- ein Auswertemodul, welches die Signale der Überwachungssensoren, insbesondere einer Teilgruppe davon auswertet und Inaktivitätsintervalle der Überwachungsperson ermittelt. Bei den Inaktivitätsintervallen handelt es sich um Zeitspannen, in denen bei der Überwachungsperson keine oder keine ausreichend starke Aktivität feststellbar ist. Das Inaktivitätsintervall kann beispielsweise in Minuten gemessen werden.
- ein Vergleichsmodul, das das ermittelte Inaktivitätsintervall mit einem oder mehreren maximalen (insbesondere zulässigen) Inaktivitätsintervallen aus einem aktiven Modell vergleicht.
- ein Alarmmodul, das ausgebildet ist, bei einer Überschreitung des ermittelten Inaktivitätsintervalls über das mindestens eine maximale Inaktivitätsintervall des aktiven Modells einen Alarm auszugeben.

Zusammenfassend nimmt die Steuerungseinrichtung die Aufgabe wahr, ein Inaktivitätsintervall zu ermitteln und mit einem oder mehreren maximalen Inaktivitätsintervallen aus einem aktiven Modell zu vergleichen und bei Überschreitung einen Alarm auszugeben.

Im Rahmen der Erfindung wird vorgeschlagen, dass die Steuerungseinrichtung ein Ortungsmodul umfasst, das ausgebildet ist, in Abhängigkeit der Signale der Überwachungssensoren die Überwachungsperson in einem der mindestens zwei Überwachungsräume zu orten und diesen Überwachungsraum als einen aktiven Überwachungsraum zu setzen.

In einer möglichen praktischen Umsetzung wird als der aktive Überwachungsraum der Überwachungsraum gesetzt, in dem der Überwachungssensor angeordnet ist, der das letzte Signal hinsichtlich einer Aktivität der Überwachungsperson übertragen hat.

Erfindungsgemäß weist das Vergleichsmodul für jeden der mindestens zwei Überwachungsräume ein separates Raummodell auf, wobei das Vergleichsmodul ausgebildet ist, das Raumodell des aktiven Überwachungsraums als das aktive Modell zu setzen.

Um unnötige Berechnungen zu ersparen, kann vorgesehen sein, dass das Auswertemodul nur Signale einer Teilgruppe der Überwachungssensoren auswertet, welche in dem aktiven Überwachungsraum angeordnet sind.

Der Vorteil der Erfindung ist vor allem darin zu sehen, dass unterschiedliche Inaktivitätsintervalle in Abhängigkeit vom jeweiligen Aufenthaltsraum der Überwachungsperson aktiviert werden können. So kann das Überwachungssystem so ausgebildet sein, dass maximale Inaktivitätsintervalle in einem ersten Überwachungsraum A länger sind als die maximalen Inaktivitätsintervalle in einem Überwachungsraum B.

Bei einer möglichen Ausführungsform sind die mindestens zwei Überwachungsräume aus einer beliebigen Auswahl der nachfolgenden Räume ausgewählt: Schlafzimmer, Küche, Esszimmer, Badezimmer, Wohnzimmer. Das Überwachungssystem nutzt die üblichen Gewohnheiten von Menschen aus, dass beispielsweise die maximalen Inaktivitätsintervalle in dem Schlafzimmer, insbesondere während der Nacht, sehr lange ausfallen können, wohingegen die maximalen Inaktivitätsintervalle in einem Badezimmer wesentlich kürzer gewählt sein müssen. Im Schlafzimmer ist nämlich davon auszugehen, dass die Überwachungsperson über mehrere Stunden schläft und somit ein Inaktivitätsintervall von z.B. größer fünf Stunden unauffällig ist. Dem gegenüber ist ein Inaktivitätsintervall von mehr als zwei Stunden in einem Badezimmer sicherlich unüblich und deutet auf eine Notsituation der Überwachungsperson hin.

Bei einer möglichen konstruktiven Ausgestaltung umfasst das Überwachungssystem einen Datenspeicher, in welchem die Raummodelle mit dem mindestens einen maximalen Inaktivitätsintervall sowie die in dem zum Raummodell zugeordneten Überwachungsraum angeordneten Überwachungssensoren als Daten hinterlegt sind.

Bei einer besonders bevorzugten Weiterbildung der Erfindung sind die Überwachungssensoren zur Ortung der Überwachungsperson als berührungslose und/oder kontaktlose Sensoren, insbesondere als Distanzsensoren ausgebildet, welche eine Aktivität bei einer Distanz der Überwachungsperson zu dem Überwachungssensor von größer als einen Meter detektieren können. Als mögliche Sensoren können z. B. Bewegungssensoren oder Kameras eingesetzt werden. Prinzipiell ist es im Rahmen der Erfindung auch möglich, dass die Überwachungssensoren als eine Kombination von Ortungseinrichtung und Sender ausgebildet sind, wobei der Sender von der Überwachungsperson am Körper, zum Beispiel in Form eines Armbandes oder eines Halsbandes getragen wird. Es ist jedoch bevorzugt, wenn die Überwachungssensoren als Sensoren ausgebildet sind, welche die Überwachungsperson als passives Überwachungsobjekt - also ohne Sender oder andere Vorrichtungen - detektiert.

Bei einer bevorzugten Ausgestaltung der Erfindung sind die Längen der maximalen Inaktivitätsintervalle des mindestens einen Raummodells, einiger Raummodelle oder aller Raummodelle zeitpunktabhängig, insbesondere tages-, wochen- und/oder jahreszeitabhängig. Das Überwachungssystem weist durch diese Ausgestaltung eine variable Reaktionszeit auf, wobei die Schwellen für die erlaubten Inaktivitätsintervalle individuell angepasst sein können. Betrachtet man beispielsweise das Raummodell eines Schlafzimmers, so können die maximalen Inaktivitätsintervalle in der Nacht mehr als fünf Stunden betragen, wohingegen die maximalen Inaktivitätsintervalle am Vormittag z. B. gleich/kleiner als zwei Stunden angenommen werden sollten.

Bei einer möglichen konkreten Ausgestaltung der Erfindung weist das Raummodell mit zeitpunktabhängigen maximalen Inaktivitätsintervallen eine Mehrzahl von Zeitscheiben, wobei die Zeitscheiben einen Tag in Intervalle unterteilen. Zum Beispiel sind einem Tag mehr als fünf Zeitscheiben, vorzugsweise mehr als zehn Zeitscheiben und insbesondere zwölf Zeitscheiben zugeordnet, welche den Tag in vorzugsweise gleichlange Intervalle unterteilen. Bei der konkreten Ausgestaltung ist jeder Zeitscheibe ein maximales Inaktivitätsintervall zugeordnet ist, so dass sich über den Tag eine Schwellwertlinie bildet, welche die maximalen Inaktivitätsintervalle anzeigt. Die Schwellwertlinie kann z. B. wie eine Stufen- oder Treppenfunktion ausgebildet sein, bei abgewandelten Ausgestaltungen kann die Schwellwertlinie auch geglättet oder als eine Interpolationslinie etc. ausgebildet sein. Bei einer Weiterbildung der Erfindung kann die Schwellwertlinie auch ein sich ständig variierendes maximales Inaktivitätsintervall anzeigen.

Bei einer Alternative oder einer Weiterbildung der Erfindung kann auch vorgesehen sein, dass bei mindestens einem Raummodell, einigen Raummodellen oder allen Raummodellen die Längen der maximalen Inaktivitätsintervalle zeitpunktunabhängig gewählt sind. Einsatzgebiete für ein derartiges Raummodell können beispielsweise bei kleinen Toiletten (Gästetoiletten) gesehen werden, welche nur eine Toilette und ein Handwaschbecken umfassen, wobei die durchschnittliche Verweildauer der Überwachungsperson unabhängig vom Zeitpunkt immer annähernd gleich ist. Folglich kann auch das maximale Inaktivitätsintervall zeitpunktunabhängig angenommen werden ohne die Überwachungsqualität zu verringern.

Bei einer möglichen Weiterbildung der Erfindung weist das Überwachungssystem eine Lern-Einrichtung auf, die ausgebildet ist, auf Basis von aufgenommen Signalen der Überwachungssensoren ein Raummodell zu erstellen und/oder zu trainieren, insbesondere erstmalig einzulernen oder zu aktualisieren. In einer möglichen konstruktiven Ausgestaltung umfasst die Lern-Einrichtung einen Signalrekorder, welcher die Signale der Überwachungssensoren aufnimmt. In einem Analysemodul werden die Signale der Überwachungssensoren den verschiedenen Überwachungsräumen zugeordnet und hinsichtlich des Inaktivitätsverhaltens z.B. statistisch analysiert. Beispielsweise kann für jede Tageszeit oder für jede Zeitscheibe ein durchschnittliches Inaktivitätsintervall sowie dessen Standardabweichung bestimmt werden. Weitere Möglichkeiten zur Feststellung derartiger Inaktivitätsintervalle sind beispielsweise in der eingangs zitierten US 7,091,865B2 dargestellt. Auf Basis der ermittelten durchschnittlichen Inaktivitätsintervalle sowie deren Standardabweichungen und anderer statistischer Werte kann das zeitpunktabhängige Raummodell erstellt oder initialisiert werden.

Im Betrieb des Überwachungssystems ist es möglich, dass durch die Lern-Einrichtung ein vorhandenes Raummodell aktualisiert wird und sich dadurch während der Laufzeit des Überwachungssystems verbessert.

Bei einer möglichen Weiterbildung der Erfindung weist die Lern-Einrichtung ein Freigabemodul auf, welches ausgebildet ist, ein trainiertes Raummodell für die Überwachung z.B. durch Benutzereingriff frei zu geben. Dieses Freigabemodul erlaubt zum einen eine nochmaligen Überprüfung, ob das trainierte Raummodell eine sinnvolle Überwachung zulässt. Zum anderen erscheint es gerade bei aktualisierten Raummodellen als sinnvoll, die Veränderungen zu überprüfen, da diese zum Beispiel auf die Verschlechterung des Gesundheitszustandes der Überwachungsperson hindeuten könnten, zum Beispiel, wenn auffällige Aktivitätsmuster vorliegen.

Ein weiterer Gegenstand der Erfindung betrifft ein Verfahren mit den Merkmalen des Anspruches 9, welches vorzugsweise durch ein Überwachungssystem, wie es zuvor beschrieben wurde bzw. nach einem der vorhergehenden Ansprüche umgesetzt ist. Das Verfahren dient zur Überwachung einer Überwachungsperson in einer Überwachungsbereich, welcher mindestens zwei Überwachungsräume umfasst, wobei jedem der mindestens zwei Überwachungsräume ein separates oder unterschiedliches Raummodell mit maximalen Inaktivitätsintervallen zugeordnet ist. Die nachfolgenden Schritte können in der dargestellten Reihenfolge abgearbeitet werden, deren Reihenfolge ist jedoch nicht zwingend notwendig. In einem Schritt des Verfahrens wird die Überwachungsperson in einem der mindestens zwei Überwachungsräume geortet und dieser Überwachungsraum als aktiver Überwachungsraum gesetzt. In einem anderen Schritt wird das Raummodell des aktiven Überwachungsraum als aktives Modell gesetzt. In einem anderen Schritt werden Signale aus Überwachungssensoren, die dem aktiven Überwachungsraum zugeordnet sind, ausgewertet und Inaktivitätsintervalle der Überwachungsperson in dem aktiven Überwachungsraum ermittelt. In einem anderen Schritt wird das ermittelte Inaktivitätsintervall mit maximalen Inaktivitätsintervallen aus dem aktiven Modell verglichen, wobei bei einer Überschreitung des ermittelten Inaktivitätsintervalls über das maximale Inaktivitätsintervall des aktiven Modells ein Alarm ausgegeben wird.

Ein weiterer Gegenstand betrifft ein Computerprogramm mit den Merkmalen des Anspruches 10.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 ein schematisches Blockdiagramm eines Überwachungssystems als ein erstes Ausführungsbeispiel der Erfindung;
Figur 2 ein Raummodell mit maximalen Inaktivitätsintervallen für das Überwachungssystem in der Figur 1;
Figur 3 einen Graph zur Illustration der Generierung des Raummodells in der Figur 2.

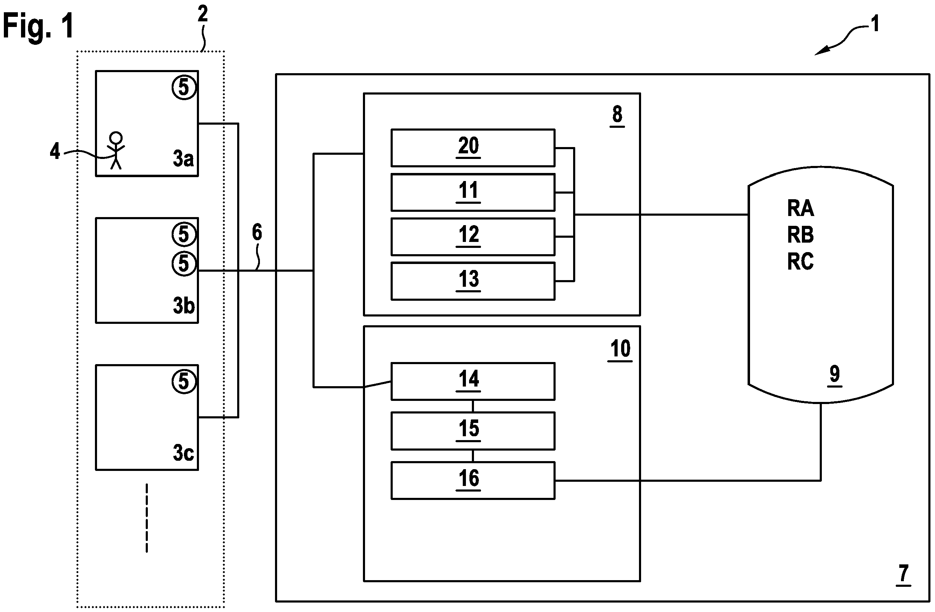

Die Figur 1 zeigt in Form eines schematischen Blockschaltbildes ein Überwachungssystem 1 in Form eines Hausnotrufsystems als ein Ausführungsbeispiel der Erfindung. Das Überwachungssystem 1 dient zur Überwachung eines Überwachungsbereichs 2 in Form einer Wohnung oder eines Hauses mit mehreren Überwachungsräumen 3 a, b, c etc. Mit Hilfe des Überwachungssystem 1 wird in dem Überwachungsbereich 2 eine Überwachungsperson 4 überwacht, welche beispielsweise ein älterer oder hilfebedürftiger Mensch sein kann.

Zur Überwachung sind in jedem Überwachungsraum 3 a, b, c mindestens ein Überwachungssensor 5 angeordnet, wobei die Überwachungssensoren 5 einen Teil des Überwachungssystems 1 bilden. In jedem Überwachungsraum 3 a, b, c können auch mehr als ein Überwachungssensor 5 angeordnet sein. Die Überwachungssensoren 5 sind beispielsweise als Bewegungssensoren, Videosensoren oder - optional - als Türkontaktsensor, Trittmattensensor etc. ausgebildet. Optional ergänzend können zusätzliche Sensoren verwendet werden, die am Körper getragen werden, wie z.B. Schrittsensoren oder Beschleunigungssensoren.

Über eine Datenverbindung 6, welche kabelgebunden oder auch kabellos ausgebildet sein kann, werden die Signale der Überwachungssensoren 5 in eine Empfangsvorrichtung 7 geleitet und dort weiter verarbeitet. Die Empfangsvorrichtung 7 umfasst eine Steuerungseinrichtung 8 sowie ein Datenbank 9 und optional ergänzend eine Lern-Einrichtung 10.

In der Datenbank 9 ist zum einen eine Zuordnung der Überwachungssensoren 5 zu den Überwachungsräumen 3 a, b, c etc. abgelegt, so dass Untergruppen der Überwachungssensoren 5 exklusiv einem einzigen Überwachungsraum 3 a, b oder c zugeordnet sind. Zum zweiten sind in der Datenbank 9 den Überwachungsräumen 3 a, b, c Raummodelle RA, RB, RC etc. zugeordnet, wobei jeweils einem Überwachungsraum 3 a, b, c genau ein Raummodell RA, RB, RC exklusiv zugeordnet ist und sich die Raummodelle RA, RB, RC untereinander unterscheiden.

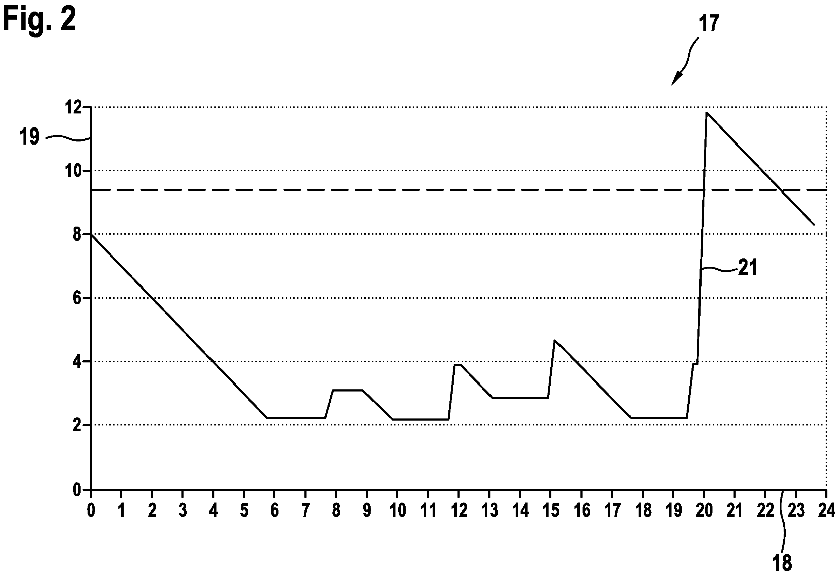

Die Steuerungseinrichtung 8 weist ein Ortungsmodul 20, ein Auswertemodul 11, ein Vergleichsmodul 12 und ein Alarmmodul 13 auf, deren Funktionsweise und Eigenschaft nachfolgend anhand der Schilderung eines Ausführungsbeispiels des erfinderischen Verfahrens erläutert werden:
Im Betrieb nehmen die Überwachungssensoren 5 Aktivitätssignale der Überwachungsperson 4 auf und senden diese Signale über die Datenverbindung 6 in die Steuerungseinrichtung 8, wo die Signale zunächst dem Ortungsmodul 20 zugeführt werden. In dem Ortungsmodul 20 wird anhand der Signale einer der Überwachungsräume 3 a, b oder c als aktiver Überwachungsraum bestimmt,
   wobei der aktive Überwachungsraum 3 a, b, c zum Beispiel der Überwachungsraum 3 a, 3 b, 3 c ist, aus dem zeitlich betrachtet ein letztes Aktivitätssignal von den zugeordneten Überwachungssensoren 5 gekommen ist. Um Rechenzeit zu sparen, konzentriert sich die Steuerungseinrichtung 8 nachfolgend auf den aktiven Überwachungsraum, zum Beispiel und wie in der Figur 1 gezeigt, den Überwachungsraum 3 a.
In dem Auswertemodul 11 werden die Signale der Überwachungssensoren 5 aus dem aktiven Überwachungsraum 4 kombiniert oder fusioniert und ein Inaktivitätsintervall bestimmt. Im einfachsten Fall bestimmt sich das Inaktivitätsintervall durch die Zeitspanne, welche zwischen dem letzten Aktivitätssignal eines Überwachungssensors 5 aus dem aktiven Überwachungsraum 3 a bis zur aktuellen Zeit vergangen ist.
In dem Vergleichsmodul 12 wird das bestimmte Inaktivitätsintervall mit einem maximalen Inaktivitätsintervall aus dem Raummodell RA des aktiven Überwachungsraums 3 a als aktives Modell verglichen. Das Raummodell RA kann beispielsweise ein maximales Inaktivitätsintervall vorgeben, welches sich über die Tageszeit, über den Wochentag, über den Monat oder sogar über die Jahreszeit ändert. Auf ein Beispiel für ein derartiges Raummodell wird später in der Figur 2 verwiesen. Alternativ kann das Raummodell aber auch nur ein einziges maximales Inaktivitätsintervall bereitstellen. Im Vergleichsmodul 12 wird das bestimmte Inaktivitätsmodul mit dem maximal zulässigen Inaktivitätsmodul 12 aus dem Raummodul verglichen und bei einem Überschreiten über das Alarmmodul 13 ein Alarm ausgelöst.

Das Überwachungssystem 1 nutzt somit zum einen aus, dass die maximal zulässigen Inaktivitätsintervalle von Überwachungsraum zu Überwachungsraum 3 a, 3 b, 3 c unterschiedlich lang ausgeprägt sein können und zudem, dass innerhalb eines Überwachungsraums 3 a, b c sich das maximal zulässige Inaktivitätsintervall im Tagesverlauf ändern kann. Dadurch kann die Reaktionszeit des Überwachungssystems 1 individuell für die Überwachungsperson 4, das heißt zum Beispiel abhängig von aktueller Tageszeit, Wochentag und aktuellem Aufenthaltsraum eingestellt werden, so dass nun variable Reaktionszeiten zur Alarmgenerierung realisiert werden können. Durch die Individualisierung sind abhängig von dem jeweiligen Aufenthaltsort wesentlich niedrigere Reaktionszeiten möglich bei zugleich gleichbleibender Fehleralarmrate.

Die Raummodelle RA, RB, RC können zum einen z.B. durch Benutzereingabe starr vorgegeben werden, zum anderen ist es möglich, dass diese über die Lern-Einrichtung 10 trainiert werden, wie nachfolgend dargelegt wird:
In einem ersten Schritt werden über einen Signalrekorder 14 Sensordaten über einen längeren Zeitraum, zum Beispiel über mehrere Tage oder Wochen, über das Verhalten der Überwachungsperson 4 gespeichert. In einem Analysemodul 15 werden die Sensordaten zunächst in Abhängigkeit von den Positionen der Überwachungssensoren 5 in den Überwachungsräumen 3 a, b, c den jeweiligen Raummodellen RA, RB, RC zugeordnet und auf Basis der vorliegenden Sensordaten Inaktivitätsintervalle bestimmt, welche tatsächlich erfolgt sind und als normal betrachtet wurden. Durch Aufnahme ausreichender Sensordaten ist es dann möglich, die Raummodelle RA, RB, RC mit zeitlich abhängigen maximalen Inaktivitätsintervallen zu bestimmen.

Ein optional vorhandenes Freigabemodul 16 dient dazu, ein durch das Analysemodul 15 erzeugtes Raummodell RA, RB, RC tatsächlich für den Betrieb in der Steuerungseinrichtung 8 freizugeben. Zudem hat das Freigabemodul 16 den Vorteil, dass Bedienpersonal das trainierte Raummodell RA, RB, RC prüfen und gegebenenfalls korrigieren kann.

In der Figur 2 ist ein Graph 17 dargestellt, bei dem auf der X-Achse 18 die Tageszeit in Stunden und auf der Y-Achse 19 das maximale (insbesondere zulässige) Inaktivitätsintervall ebenfalls in Stunden aufgetragen ist und damit die Daten für ein Raummodell RA, RB oder RC bereitstellt. Eine Schwellwertlinie 21 definiert die maximalen Inaktivitätsintervalle in Abhängigkeit der Tageszeit. So darf beispielsweise um 1:00 Uhr nachts ein Inaktivitätsintervall mit einer Länge von maximal 7 Stunden beginnen, wobei somit nach mehr als 7 Stunden, gerechnet ab 1:00 Uhr, ein Alarm ausgelöst wird. Um 6:00 Uhr morgens darf dagegen ein beginnendes Inaktivitätsintervall nur noch 2 Stunden betragen. Es ist zu unterstreichen, dass die anderen Raummodelle RB und RC gleichartige Definitionen mit maximalen Inaktivitätsintervallen aufweisen können, wobei jedoch der Verlauf der Schwellwertlinie 21 anders ausgebildet sein kann.

Optional ergänzend können noch Ober- und Untergrenzen vorgegeben werden. Dabei ist als Obergrenze z.B. 12h oder 24h entsprechend der eingangs beschriebenen Totmannüberwachung zu wählen. Untergrenzen für die Alarmgenerierung können beliebig manuell vorgegeben werden, um etwaige Fehlalarme zu reduzieren. Um zu vermeiden, dass längere Abwesenheiten aus dem Überwachungsbereich 2 zu einem Fehlalarm führen kann in einer optionalen Ergänzung mit Hilfe eines zusätzlichen Türkontakts an der Wohnungs- bzw. Haustür eine automatisierte Abwesenheitserkennung erfolgen. Bei Erkennung einer Abwesenheit werden alle Raummodelle deaktiviert.

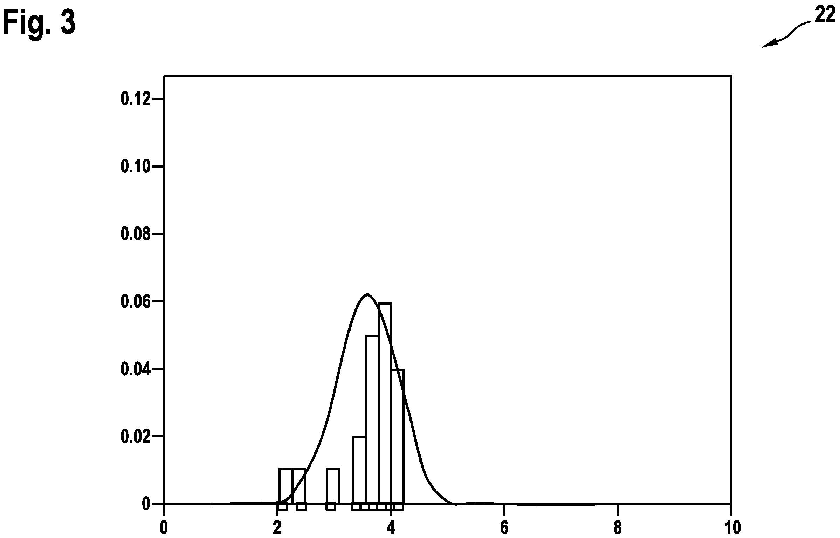

Die Figur 3 zeigt einen weiteren Graph 22 in dem die Inaktivitätsintervalle in Stunden, welche in dem Zeitraum zwischen 0:00 Uhr und 2:00 Uhr beginnen, gegen deren Häufigkeit dargestellt sind. Die Häufigkeitsverteilung ist auf Basis von Daten aus dem Signalrekorder 14 gebildet worden. Aus der Häufigkeitsverteilung ist zu entnehmen, dass Inaktivitätsintervalle zwischen 2 Stunden und 4 Stunden als normal angesehen werden. Berücksichtigt man ergänzend mögliche Schwankungen, so ergeben sich für die Zeit zwischen 0:00 Uhr und 2:00 Uhr erlaubte maximale Inaktivitätsintervalle von ca. 5 Stunden. Einfache Implementierungen wären z.B. (Maximalwert der Verteilung + vorgebbaren Sicherheitsabstand) oder (Mittelwert +Standardabweichung).

## Patentansprüche

1. Überwachungssystem (1) zur Überwachung eines Inaktivitätsverhalten von mindestens einer Überwachungsperson (4) in einem Überwachungsbereich (2), wobei der Überwachungsbereich (2) mindestens zwei unterschiedliche Überwachungsräume (3a,b,c) umfasst,
mit einer Mehrzahl von Überwachungssensoren (5), die den mindestens zwei Überwachungsräumen (3a,b,c) zuordbar oder zugeordnet sind, wobei die Überwachungssensoren (5) zur Detektion einer Aktivität der Überwachungsperson (4) ausgebildet sind,
mit einer Steuerungseinrichtung (8) umfassend
ein Auswertemodul (11), das ausgebildet ist, Signale der Überwachungssensoren (5) auszuwerten und Inaktivitätsintervalle der Überwachungsperson (5) zu ermitteln, und
ein Vergleichsmodul (12), das ausgebildet ist, das ermittelte Inaktivitätsintervall mit mindestens einem maximalen Inaktivitätsintervall aus einem aktiven Modell (RA) zu vergleichen, sowie
ein Alarmmodul (13), das ausgebildet ist, bei einer Überschreitung des ermittelten Inaktivitätsintervall über das maximale Inaktivitätsintervall des aktiven Modells (RA) einen Alarm auszugeben,
**dadurch gekennzeichnet, dass**
die Steuerungseinrichtung (8) ein Ortungsmodul (20) umfasst, welches ausgebildet ist, in Abhängigkeit der Signale der Überwachungssensoren (5) die Überwachungsperson (4) in einem der mindestens zwei Überwachungsräumen (3a,b,c) zu orten und diesen Überwachungsraum (3a,b,c) als einen aktiven Überwachungsraum (3a) zu setzen,
wobei das Vergleichsmodul (12) für jeden der mindestens zwei Überwachungsräume (3a,b,c) ein separates Raummodell (RA, RB, RC) aufweist und wobei das Vergleichsmodul (12) ausgebildet ist, das Raummodell (RA) des aktiven Überwachungsraums (3a) als das aktive Modell (RA) zu setzen.

2. Überwachungssystem (1) nach Anspruch 1, **dadurch gekennzeichnet, dass** die mindestens zwei Überwachungsräume (3a,b,c) aus einer beliebigen Auswahl der nachfolgenden Räume ausgewählt sind:
- Schlafzimmer
- Küche
- Esszimmer
- Badezimmer
- Wohnzimmer

3. Überwachungssystem (1) nach Anspruch 1 oder 2, **dadurch gekennzeichnet, dass** die Überwachungssensoren (5) zur Ortung der Überwachungsperson (4) als berührungslose und/oder kontaktlose Sensoren ausgebildet sind.

4. Überwachungssystem (1) nach einem der vorhergehenden Ansprüche, **dadurch gekennzeichnet, dass** die Länge des maximalen Inaktivitätsintervall des Raummodells (RA, RB, RC) zeitpunktabhängig, insbesondere tages-, wochen-, und/oder jahreszeitabhängig sind.

5. Überwachungssystem (1) nach Anspruch 4, **dadurch gekennzeichnet, dass** das Raummodell (RA, RB, RC) eine Mehrzahl von Zeitscheiben aufweist, wobei jeder Zeitscheibe ein maximales Inaktivitätsintervall zugeordnet ist.

6. Überwachungssystem (1) nach einem der vorhergehenden Ansprüche, **dadurch gekennzeichnet, dass** die Länge der maximalen Inaktivitätsintervalle des Raummodells (RA, RB, RC) zeitpunktunabhängig sind.

7. Überwachungssystem (1) nach einem der vorhergehenden Ansprüche,
**gekennzeichnet durch** eine Lerneinrichtung (10), welches ausgebildet ist, auf Basis von aufgenommenen Signalen der Überwachungssensoren (5) ein Raummodell (RA, RB, RC) zu erstellen und/oder zu trainieren.

8. Überwachungssystem (1) nach Anspruch 7, **dadurch gekennzeichnet, dass** die Lerneinrichtung (10) ein Freigabemodul (16) aufweist, welches ausgebildet ist, ein trainiertes Raummodell (RA) für die Überwachung freizugeben.

9. Verfahren zur Überwachung einer Überwachungsperson (4) in einem Überwachungsbereich (2) mit mindestens zwei Überwachungsräumen (3a,b,c), wobei jedem der mindestens zwei Überwachungsräumen ein Raummodell (RA, RB, RC) mit maximalen Inaktivitätsintervallen zugeordnet ist, vorzugsweise mit einem Überwachungssystem (1) nach einem der vorhergehenden Ansprüchen, wobei
in einem Schritt die Überwachungsperson (4) in einem der mindestens zwei Überwachungsräume (3a,b,c) geortet wird und dieser Überwachungsraum (3a) als aktiver Überwachungsraum (3a) gesetzt wird,
in einem Schritt das Raummodell (RA) des aktiven Überwachungsraums (3a) als aktives Modell gesetzt wird,
in einem Schritt Signale aus Überwachungssensoren (5), welche den mindestens zwei Überwachungsräumen (3a,b,c) zugeordnet sind, auszuwerten und Inaktivitätsintervalle der Überwachungsperson (4) in dem aktiven Überwachungsraum (3a) zu ermitteln und
in einem Schritt das ermittelte Inaktivitätsintervall mit maximalen Inaktivitätsintervallen aus dem aktiven Modell (RA) zu vergleichen, sowie bei einer Überschreitung des ermittelten Inaktivitätsintervall über das maximale Inaktivitätsintervall des aktiven Modells (RA) einen Alarm auszugeben.

10. Computerprogramm mit Programmcode-Mitteln, um alle Schritte des Verfahrens nach Anspruch 9 durchzuführen, wenn das Programm auf einem Computer und/oder einem Überwachungssystem (1) von jedem Beliebigen der Ansprüche 1 bis 8 ausgeführt wird.
